(19)

**Europäisches Patentamt**
**European Patent Office**
**Office européen des brevets**

(11) **EP 4 586 331 A1**

(12) **EUROPEAN PATENT APPLICATION**

(43) Date of publication:
**16.07.2025 Bulletin 2025/29**

(21) Application number: **24205891.5**

(22) Date of filing: **10.10.2024**

(51) International Patent Classification (IPC):
*H01M 4/04* (2006.01)       *H01M 4/139* (2010.01)
*B29C 43/24* (2006.01)

(52) Cooperative Patent Classification (CPC):
**H01M 4/0435; B29C 43/24; H01M 4/043;
H01M 4/139**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:   **15.01.2024  CN 202410058114
01.03.2024  PCT/CN2024/079648**

(71) Applicant: **Eve Energy Co., Ltd.
Huizhou, Guangdong 516006 (CN)**

(72) Inventors:
• **JIA, Qiang**
  **Huizhou, Guangdong 516006 (CN)**
• **ZHAO, Ruirui**
  **Huizhou, Guangdong 516006 (CN)**
• **REN, Ren**
  **Huizhou, Guangdong 516006 (CN)**
• **LI, Jianping**
  **Huizhou, Guangdong 516006 (CN)**
• **ZHOU, Siqiuyue**
  **Huizhou, Guangdong 516006 (CN)**

(74) Representative: **Murgitroyd & Company
165-169 Scotland Street
Glasgow G5 8PL (GB)**

(54) **METHOD FOR PREPARING DRY ELECTRODE SHEET FILM AND PREPARATION APPARATUS THEREOF**

(57)      Disclosed are a method for preparing a dry electrode sheet film and a preparation apparatus thereof. The method includes providing first rollers (20) with a roll diameter of d1, and rolling and pressing fibrotic powders through the first rollers (20) under a pressure of t1 to obtain a primary film (300) with a first thickness; providing second rollers (40) with a roll diameter of d2, wherien d2<d1, t2<t1, and subjecting the primary film (300) to first thinning through the second rollers (40) under a pressure of t2 to obtain a secondary film (400) with a second thickness; and providing at least one pair of third rollers (50) with a roll diameter of d3, wherein d3>d1, t3>t1, and subjecting the secondary film (400) to second thinning through the third rollers (50) under a pressure of t3 to obtain a target film (500) with a target thickness.

EP 4 586 331 A1

**Description**

TECHNICAL FIELD

The present disclosure relates to the technical field of electrode sheets, and in particular, to a method for preparing a dry electrode sheet film and a preparation apparatus thereof.

BACKGROUND

In the preparation process of lithium-ion batteries, a dry method technology, which is different from a wet method for preparing batteries, has been vigorously applied in recent years. Since dry method electrode technology does not use or uses a small amount of solvent, compared with the wet method, it saves a large amount of energy and costs for recycling the solvent, and meanwhile saves dozens of meters of baking channels and reduces investment costs, so it has cost advantages.

In the preparation process of dry electrodes, active materials, conductive agents and binders are subjected to a shear force at a specific temperature for fiberization to obtain fibrotic powders, which are rolled and pressed into a film and then wound. In the existing films prepared by a dry method, the strength of the films is insufficient due to improper matching of the size and pressure of the rollers.

SUMMARY OF INVENTION

In a first aspect, the present disclosure provides a method for preparing a dry electrode sheet film, which includes:

providing a pair of first rollers with a roll diameter of d1, setting a pressure of each of the pair of first rollers as 11, and rolling and pressing fibrotic powders through the pair of first rollers to obtain a primary film with a first thickness;

providing a pair of second rollers with a roll diameter of d2, and d2 being less than d1, setting a pressure of each of the second rollers as t2, and t2 being less than t1, and subjecting the primary film to first thinning through the pair of second rollers to obtain a secondary film with a second thickness; and

providing at least one pair of third rollers with a roll diameter of d3, and d3 being greater than d1, setting a pressure of each of the third rollers as t3, and t3 being greater than t1, and subjecting the secondary film to second thinning through the pair of third rollers to obtain a target film with a target thickness.

In a second aspect, the present disclosure provides an apparatus for preparing a dry electrode sheet film, which includes:

a pair of first rollers disposed downstream of the feeding structure for rolling and pressing fibrotic powders to obtain a primary film with a first thickness, a roll diameter of each of the pair of first rollers being d1, and a pressure of each of the pair of first rollers being t1;

a pair of second rollers disposed downstream of the pair of first rollers for subjecting the primary film to first thinning to obtain a secondary film with a second thickness, a roll diameter of each of the pair of second rollers being d2, and a pressure of each of the pair of second rollers being t2; and

at least one pair of third rollers disposed downstream of the pair of second rollers for subjecting the secondary film to second thinning to obtain a target film with a target thickness, a roll diameter of each of the at least one pair of third rollers being d3, and a pressure of each of the pair of at least one pair of third rollers being t3;

wherein d3>d1>d2, and t3>t1>t2.

The roll diameter and pressure of the first rollers for pressing fibrotic powders into a film, the second rollers for adjusting the thickness and compactness of the film for the first time and the third rollers for adjusting the thickness and compactness of the film for the second time are set as d3>d1>d2, and t3>t1>t2. In this way, when the fibrotic powders are pressing into a film and the thickness of the film is adjusted, the fibrotic powders can be pressed to form a primary film with a larger roll diameter and higher pressure at first by the first rollers, and then the primary film can be roughly adjusted by the second rollers with a smaller roll diameter and pressure at a faster traveling speeds, so that the thickness and compactness of the film can be initially adjusted. Finally, the film can be finely adjusted by the third rollers with the largest roll diameters and the highest pressure. As a result, the obtained film can have the required thickness, and a higher compactness. Meanwhile, the obtained film has better mechanical properties such as higher strength and more suitable toughness. The film has an excellent pore structure to improve the electrical properties of the batteries when the film is applied to the batteries. Further, the obtained film has lower tortuosity.

DESCRIPTION OF THE DRAWINGS

FIG. 1 is a schematic flow chart of a method for preparing a dry electrode sheet film according to some embodiments of the present disclosure.

FIG. 2 is a schematic diagram comparing tensile strength of a film prepared in embodiments of the present disclosure and a film prepared by a conventional process.

FIG. 3 is a schematic structural diagram of an apparatus or preparing a dry electrode sheet film according to some embodiments of the present disclosure.

List of reference numbers:
200-apparatus for preparing a dry electrode sheet film, 10-feeding structure, 11-vibrating screen, 12-movable tank, 20-first roller, 30-cutting structure, 31-support roller, 32-edge cutting knife, 33-powder sucking nozzle, 34-dust collecting box, 40-second roller, 41-first scraper, 42-first guide roller, 50-third roller, 51-second scraper, 60-second guide roller, 70-winding structure, 300-primary film, 400-secondary film, 500-target film.

EMBODIMENTS OF INVENTION

In the description of the present disclosure, it should be noted that, terms such as "above", "below", "front", "back", "left", "right", "vertical", "horizontal", "top", "bottom", "inside", "outside" refer to the orientation or positional relationship based on the illustration of the appended drawings, and are only for the purpose of facilitating and simplifying the description of the present disclosure, rather than indicating or implying that the apparatus or component referred to must have a particular orientation or must be configured or operated in a particular orientation, therefore should not be construed as a limitation towards the present disclosure.

The present disclosure will now be described in further detail with reference to the accompanying drawings.

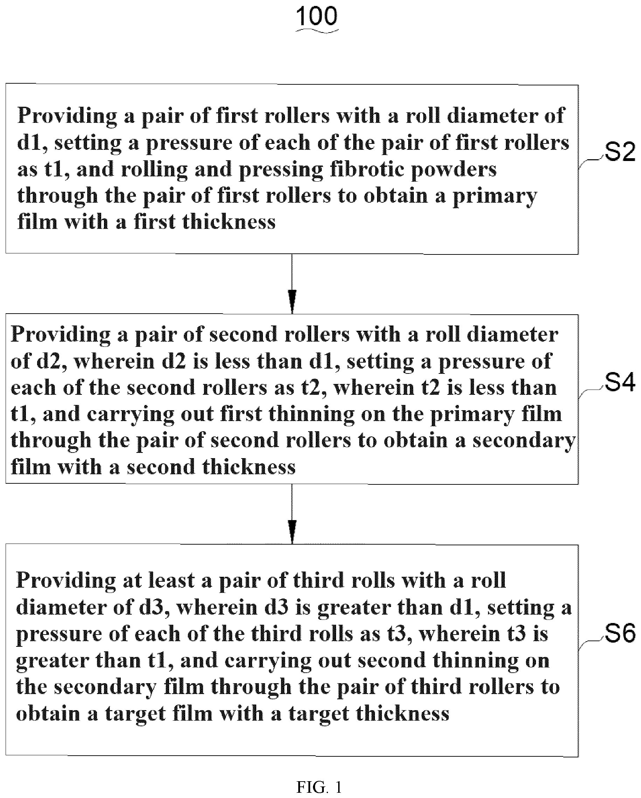

Referring to FIG. 1, a method 100 for preparing a dry electrode sheet film according to some embodiments of the present disclosure includes the following steps:
S1, feeding fibrotic powders through a feeding structure 10.

The fibrotic powders in this embodiment include, but are not limited to, fibrotic powders, formed by applying a shear force to active materials, conductive agents, and binders. The active materials may be positive electrode materials such as lithium iron phosphate, lithium nickel cobalt manganate, lithium cobalt phosphate, or a combination of one or more of graphite and/or silicon-oxygen/silicon-carbon negative electrode materials. The conductive agent includes, but is not limited to, a combination of one or more of conductive carbon black, carbon nanotubes, graphene, and the like. Binder includes, but is not limited to, a combination of one or more of polytetrafluoroethylene, tetrafluoroethylene, polyacrylic acid, carboxymethylcellulose, polyethylene glycol, polyvinyl pyrrolidone, and the like.

Fibrotic powders are obtained by subjecting the active materials, the conductive agents, and the binders to a shear force, then the fibrotic powders are fed through a feeding structure 10.

Specifically, the feeding structure 10 in this embodiment includes a vibrating screen 11 and a movable tank 12 disposed below the vibrating screen 11. Specifically, the vibrating screen 11 includes two layers of screens disposed from top to bottom, and the fibrotic powders are dropped downward from the screen holes of the screens.

Specifically, in this embodiment, the pore size of the screens is set to range from 0.5 mm to 5 mm, so as to match the feeding of the fibrotic powders with different proportions of components, and to match the parameters of each component in the subsequent pressing step. For example, the pore size may be 0.5 mm, 0.6 mm, 0.7mm, 1.0 mm, and 3.0 mm...5.0 mm. The vibration frequency of the vibrating screen 11 ranges from 0 HZ to 100 HZ. When the vibration rate of the vibration screen is set to be as 0, the fibrotic powders can fall out by by relying on their gravity themselves, or when the vibration screen 11 shakes, the powders are shaken by the vibration of the vibration screen 11. Specifically, the vibration frequency of the vibration screen 11 is set to be as 0 HZ, 6 HZ, 10 HZ, 20 HZ, 50 HZ, 80 HZ... 100 HZ.

S2, providing a pair of first rollers 20 with a roll diameter of d1, setting a pressure of each of the pair of first rollers 20 as t1, and rolling and pressing fibrotic powders through the pair of first rollers 20 to obtain a primary film 300 with a first thickness.

After feeding by the feeding structure 10, in this step, the fibrotic powders are rolled and pressed by a pair of first rollers 20 to obtain a primary film 300 with a first thickness. During the process of pressing the fibrotic powders into the primary film 300, the fibrotic powders gradually fall from the gap between the two first rollers 20 to be pressed into a film by the first rollers 20. The surface of each of the first rollers 20 in this embodiment is plated with a metal chromium layer, and each of the first rollers 20 is connected to a driving mechanism, so that each first roller 20 can be driven to rotate by its own driving mechanism, and each of the first rollers 20 has a different rotational speed. In this way, a speed difference is formed between the two first rollers 20, so that a traction force can be generated for the forward movement of the primary film 300. Meanwhile, the first roller 20 and the second roller 40 in this embodiment are connected to different heating mechanisms, so that the first roller 20 and the second roller 40 can be heated to different temperatures, as a result, the film at different stages has different ductility.

Specifically, in this embodiment, 10 cm$\leq$d1$\leq$30 cm 0.8 tons$\leq$t1$\leq$8 tons, that is, a smaller roll diameter and a low pressure are used to initially press the fibrotic powders into a film.

Further, the rotational speed of the first roller 20 in this embodiment is V1. Specifically, the range of the rotational speed V1 is as follows: 0 rpm <V1$\leq$1800 rpm, and the range of the temperature T1 is as follows: 50°C$\leq$T1$\leq$200°C, respectively. Combining wirh the above-mentioned roll diameter and pressure, the fibrotic powders are initially formed into a film. Further, a small pressure is used, so as to ensure the flexibility of the obtained primary film 300, which can reduce damage to the film in the subsequent thinning adjustment process. At the same time, the temperature of the first roller 20 is adjusted according to different components in the fibrotic powders actually used. Through this temperature control, the temperature of the first roller 20 is not too low. A low temperature will prevent the powders from being heated, resulting in the powders being unable to form a film quickly. The temperature of the first roller 20 should not be too high, either. A too high temperature may cause high surface temperature of the first roller, leading to lower hardness, which is not convenient for film formation. At the same time, the powders may be damaged by high temperature.

Specifically, the preferred temperature of the first roller 20 in this embodiment ranges from 30°C to 100°C. In actual production, the temperature of the first roller 20 can be adjusted according to the components of different powders.

After the primary film 300 is obtained in this step, the first thickness of the primary film 300 is controlled to be range from 0.2 mm to 1.0 mm, so that the primary film 300 has a certain thickness and can be used for subsequent thinning process.

S3, cutting edges of the primary film 300 through the cutting structure 30 to obtain a film with flat edges.

After the primary film 300 is obtained, the primary film 300 will be cut in this step.

Specifically, the cutting structure 30 in this embodiment includes a support roller 31, an edge cutting knife 32, a powder sucking nozzle 33, and a dust collecting box 34. The support roller 31 is used for supporting the primary film 300. The edge cutting knife 32 is used for cutting the edges of the primary film 300, so that the edge of the film 300 can have a certain flatness. The powder sucking nozzle 33 is used for sucking away debris and dust generated during the cutting process. The dust collecting box 34 is used for collecting debris and dust absorbed by the powder sucking nozzle 33. Thus, in this step, the flatness of the primary film 300 is adjusted by the edge cutting knife 32. Further, the powders and debris are prevented from flying into the environment through adsorption of the powder sucking nozzle 33 and collection of the dust collecting box 34.

Understandably, since the primary film 300 has an extended length, a width, and two sides along the width direction. In this case, the cutting structure 30 in this embodiment includes two edge cutting knives 32 that are oppositely disposed, and each one edge cutting knife 32 is used for cutting the edges of the primary film 300 accordingly. Meanwhile, in order to adjust the cutting width, the distance between each of the edge cutting knives 32 and the center of the primary film 300 can be adjusted, and the traveling speed of the edge cutting knife 32 is adapted to the traveling speed of the primary film 300.

S4, providing a pair of second rollers 40 with a roll diameter of d2, wherein d2 is less than d1; setting a pressure of each of the second rollers 40 as t2, wherein t2 is less than t1; and subjecting the primary film 300 to first thinning through the pair of second rollers 40 to obtain a secondary film with a second thickness.

After the cutting in the above steps is completed, the thickness of the primary film 300 will be adjusted in this step to obtain a secondary film with a second thickness.

Specifically, the range of the roll diameter d2 of the second roller 40 in this embodiment is as follows: 5 cm≤d2≤20 cm, and the range of the pressure t2 is as follows: 0.5 tons≤t2≤7 tons, which are both smaller than the roll diameter and the pressure of the first roller 20. In this way, the smaller roll diameter and pressure enable the second roller 40 to have a faster traveling speed to quickly adjust the compactness of the primary film 300. Further, the component force of the second roller 40 in the direction perpendicular to the film is smaller, so that the primary film 300 is initially extended, which is beneficial to the second thinning.

Further, the rotational speed of the second roller 40 in this embodiment is V2, and V2>V1, so that the roller can have a larger linear speed in the thinning process, thereby improving the forming efficiency of the film. Specifically, 500 rpm≤V2≤2000 rpm.

The temperature of the second roller 40 is T2, and T1≥T2. Specifically, 50°C≤T2≤200°C. The temperature of the first roller 20 and the temperature of the second roller 40 are adjusted according to different components or the same components in different proportions in the fibrotic powders actually used. Through this temperature control, the temperature of the second roller 40 is not too low. A low temperature will prevent the film from being heated. In this way, the film has a larger friction force, which is convenient to extend. At the same time, the temperature of the second roller 40 should not be too high, so as to cause damage to the film when the second roller 40 is in contact with the surface of the film.

Further, each of the two second rollers 40 in this embodiment is connected to a driving mechanism, so that each second roller 40 can be driven to rotate by its own driving mechanism, and each of the second rollers 40 has a different rotational speed. In this way, a speed difference is formed between the two second rollers 40, so that a traction force can be generated on the film due to the speed difference, so as to drive the secondary film to move forward. Meanwhile, the second rollers 40 in this embodiment are connected to different heating mechanisms, so that the two second rollers 40 can be heated to different temperatures. In this way, there is a temperature difference between the two second rollers 40 when the two second rollers 40 are heated by the heating mechanisms, so that the two sides of the film have different ductility.

Further, the parts used in the first thinning process in this embodiment further includes a first scraper 41 and a first guide roller 42. A downward pressure is applied to the film adhered to the surface of the second roller 40 by the first scraper 41, so as to separate the film from the surface of the second roller 40.

The thickness and compactness of the primary film 300 are initially adjusted by the second rollers 40, specifically, rough adjustment is performed with a faster traveling speed.

In this way, after the primary film 300 is thinned for the first time in this step, the second thickness of the prepared secondary film is controlled to range from 0.1 mm to 0.3 mm, so that the secondary film has a certain thickness, which is beneficial for subsequent adjustment of the film to realize the pressing of the target film 500 with the target thickness.

Step S5, providing at least one pair of third rollers 50 with a roll diameter of d3, wherein d3 is greater than d1; setting a pressure of each of the third rollers 50 as t3, wherein t3 is greater than t1; and subjecting the secondary film to second thinning through the pair of third rollers 50 to obtain the target film 500 with the target thickness.

After the pre-thinning in the above steps is completed, the thickness and compactness of the secondary film are adjusted again in this step. Specifically, compared with first adjustment, the film is finely adjusted this time.

Specifically, the roll diameter d3 of the third roller 50 in this embodiment is set to be as d3>d1>d2, and the pressure t3 of the third roller 50 is set to be as t3>t1>t2. That is, after the powders are formed into a film and film is initially thinned, the roller with the largest roll diameter and the highest pressure are used in the final thinning step to realize fine adjustment of the thickness and the compactness of the film.

Since the roller has a first component force parallel to the extension direction of the film and a second component force perpendicular to the extension direction of the film when pressing the film. By setting the third roller 50 with the largest roll diameter, the weight of the third roller 50 can be larger. At the same time, combing with the pressure exerted on the third roller 50, a larger component force in the vertical direction can be applied to the film. Therefore, in this embodiment, the thickness and compactness of the secondary film are adjusted for the second time by using the roller with the largest roll diameter and combining with the highest pressure in the final pressing step, so as to obtain the target film with the required target thickness and compactness. At the same time, setting a speed that is similar to that of the second roller 40 can be adapted to the traveling speed of the second roller 40, so as to adapt to the traveling speed of the film conveyed by the second roller 40.

Herein, the roll diameter d3 of the third roller 50 is set in a wide range as follows: 15 mm≤d3≤60 mm, and the range of the pressure is as follows: 1 ton ≤t3≤10 tons, so that the roll diameter of the third roller 50 can have a larger roll diameter and higher pressure than those of the first roller 20 and the second roller 40, thereby achieving the effect of adjusting the thickness and the compactness of the film as target parameters.

Further, the speed V3 of the third roller 50 in this embodiment is set to be as V2≥V3>V1. Specifically, 500 rpm≤V3≤2000 rpm. Further, the temperature of the third roller 50 in this embodiment is set to be the minimum, i.e., T1≥T2>T3, specifically, 0°C≤T3≤150°C. In this way, the third roller 50 can have a small speed and low temperature, so that the film can be finely adjusted.

Understandably, when the film is pressed by the third roller 50, a second scraper 51 is alos provided, by which a downward pressure is applied to the film adhered to the surface of the third roller 50, so as to separate the film from the surface of the third roller 50.

Specifically, the thickness of the target film obtained in this embodiment ranges from 0.06 mm to 0.2 mm.

Specifically, the roll diameter d1 of the first roller 20 in this embodiment may be set to a value of 10 cm, 12cm, 15 cm, 17 cm, 20 cm, 30 cm, etc. The roll diameter d2 of the second roller 40 may be set to a value of 5 cm, 6 cm, 7cm, 10 cm, 15 cm, 20 cm, etc. The roll diameter d3 of the third roller 50 may be set to a value of 15 cm, 30 cm, 45cm, 50 cm, 55cm, 60 cm, etc. The pressure t1 of the first roller 20 may be set to a value of 0.8 tons, 1 ton, 2 tons, 3 tons, 5 tons, 8 tons, etc. The pressure t2 of the second roller 40 may be set to a value of 0.5 tons, 1 ton, 2 tons, 4 tons, 6 tons, 7 tons, etc. The pressure t3 of the third roller 50 may be set to a value of 1 ton, 2 tons, 4 tons, 6 tons, 8 tons, 10 tons, etc.

Further, the gap between the two third rollers 50 in this embodiment is adjustable, and the precision tolerance between the two is ±1 μm, so that the final thickness of the target film 500 can be finely adjusted.

Understandably, after the preparation of the dry electrode sheet film is completed, the method for preparing the dry electrode sheet film in this embodiment further includes a winding step, in which the target film is wound through a winding structure for later use in the next step.

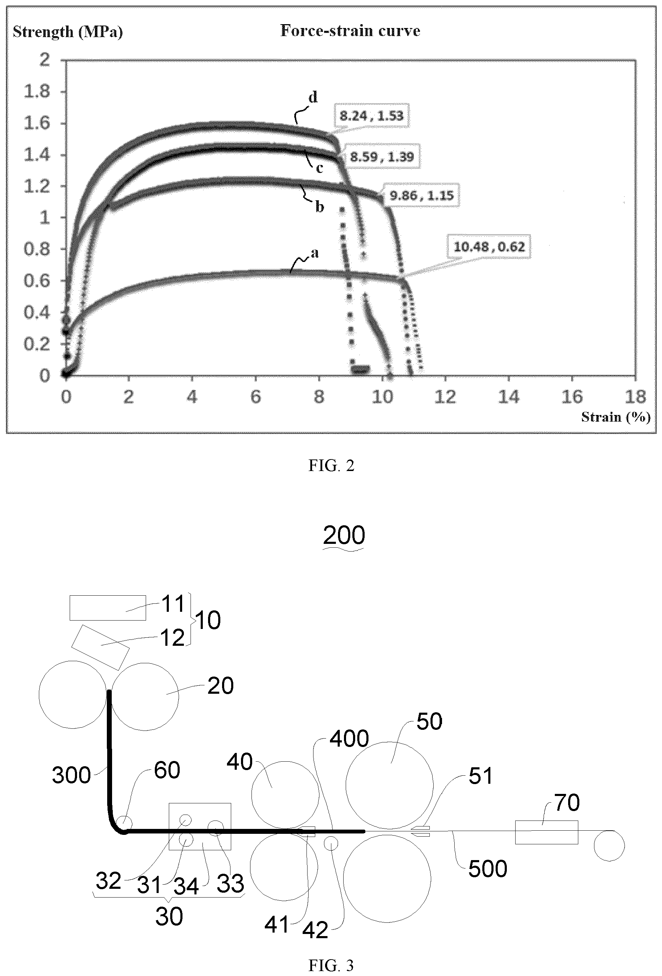

The test data of the film obtained according to the method for preparing the dry electrode sheet film in this embodiment are shown in FIG. 2, in which the curve a is a schematic diagram of the tensile strength of a film prepared by a conventional process in the prior art, the curve b is a schematic diagram of the tensile strength of the primary film obtained using the first roller 20, the curve c is a schematic diagram of the tensile strength of the secondary film obtained after the primary film is thinned by using the second roller 40, and the curve d is a schematic diagram of the tensile strength of the target film obtained after the secondary film is thinned by using the third roller 50.

Specifically, it can be seen from FIG. 2 that the thick film prepared by one-time film formation through the conventional dry process is thinned to the target surface density and thickness. Its strength and toughness are poor, with a tensile strength of 0.62 MPa, and an elongation at break of 10.48%.

The primary film obtained by pressing through the first roller 20 has a tensile strength of 1.15 MPa and an elongation at break of 9.86%, indicating that the strength and toughness of the primary film prepared by the first roller 20 are superior to those of a film obtained by the conventional process.

The secondary film obtained by thinning the primary film through the second roller 40 has a tensile strength of 1.39 MPa and an elongation at break of 8.59%. It can be concluded that the strength and toughness of the secondary film obtained by thinning the primary film through the second roller 40 are superior to those of a film obtained by the conventional process and those of the primary film prepared by the first roller 20, indicating that the parameter control of the thinning roller can effectively improve the performance of the film.

The target film obtained by sujecting the primary film to secondary thinning through the third roller 50 has a tensile strength of 1.53 MPa and an elongation at break of 8.24%. According to the above data, the strength and toughness of the target film obtained by suj ecting the primary film to secondary thinning through the second roll 40 and the third roller 50 are improved, so that the performance of the target film is effectively improved.

According to the above-mentioned method for preparing the dry electrode sheet film, the roll diameter and pressure of the first rollers 20 for pressing fibrotic powders into a film, the second rollers 40 for adjusting the thickness and compactness of the film for the first time and the third rollers 50 for adjusting the thickness and compactness of the film for the second time are set as d3>d1>d2, and t3>t1>t2. In this way, when the fibrotic powders are pressing into a film and the thickness of the film is adjusted, the fibrotic powders can be pressed to form a primary film with a larger roll diameter and higher pressure at first by the first rollers 20, and then the primary film 300 can be roughly adjusted by the second rollers 40 with a smaller roll diameter and pressure at a faster traveling speeds, so that the thickness and compactness of the film can be initially adjusted. Finally, the film can be finely adjusted by the third rollers 50 with the largest roll diameters and the highest pressure. As a result, the obtained film can have the required thickness, and a higher compactness. Meanwhile, the obtained film has better mechanical properties such as higher strength and toughness. The film has an excellent pore structure to improve the electrical properties of the batteries when the film is applied to the batteries. Further, the obtained film has lower tortuosity.

Referring to FIG. 3, the present disclosure further provides, in a second embodiment, an apparatus 200 for preparing a dry electrode sheet film, which includes a pair of first rollers 20, a pair of second rollers 40, and at least one pair of third rollers 50.

The pair of first rollers 20 is used to roll and press fibrotic powders to obtain a primary film 300 with a first thickness. The roll diameter of each of the pair of first rollers 20 is d1. The pressure of each of the pair of first rollers 20 is t1. The pair of second rollers 40 is disposed downstream of the pair of first rollers 20 for subjecting the primary film 300 to first thinning to obtain a secondary film with a second thickness. The roll diameter of each of the pair of second rollers 40 is d2. The pressure of each of the pair of second rollers 40 is t2. The at least one pair of third rollers 50 is disposed downstream of the pair of second rollers 40 for subjecting the secondary film to second thinning to obtain a target film with a target thickness. The roll diameter of each of the at least one pair of third rollers 50 is d3. The pressure of each of the pair of at least one pair of third rollers 50 is t3. Specifically, d3>d1>d2, and t3>t1>t2.

According to the above-mentioned apparatus 200 for preparing the dry electrode sheet film, the roll diameter and pressure of the first rollers 20 for pressing fibrotic powders into a film, the second rollers 40 for adjusting the thickness and compactness of the film for the first time and the third rollers 50 for adjusting the thickness and compactness of the film for the second time are set as d3>d1>d2, and t3>t1>t2. In this way, when the fibrotic powders are pressing into a film and the thickness of the film is adjusted, the fibrotic powders can be pressed to form a primary film with a larger roll diameter and higher pressure at first by the first rollers 20, and then the primary film 300 can be roughly adjusted by the second rollers 40 with a smaller roll diameter and pressure at a faster traveling speeds, so that the thickness and compactness of the film can be initially adjusted. Finally, the film can be finely adjusted by the third rollers 50 with the largest roll diameters and the highest pressure. As a result, the obtained film can have the required thickness, and a higher compactness. Meanwhile, the obtained film has better mechanical properties such as higher strength and toughness. The film has an excellent pore structure to improve the electrical properties of the batteries when the film is applied to the batteries. Further, the obtained film has lower tortuosity.

Further, the preparation apparatus in this embodiment further includes a feeding structure 10 for feeding fibrotic powders to the pair of first rollers 20. The feeding structure 10 includes a vibrating screen 11 and a movable tank 12 disposed below the vibrating screen 11. The vibrating screen 11 includes two layers of screens that are disposed separately from top to bottom. The movable tank 12 is used for receiving the powders dropped from the vibrating screen 11 and sending them out. In this way, after the powders fall onto the vibrating screen 11, the vibrating screen 11 vibrates to gradually drop the powders onto the movable tank 12 through the two layers of screens. The movable tank 12 can be gradually adjusted from the vertical state to the horizontal state to move the powders, so as to gradually drop the powders, and adjust the dropping speed the powders at the same time, thus avoiding the accumulation or agglomeration of the powders.

Understandably, in this embodiment, a second guide roller 60 is further provided, so that the primary film 300 can be reversely and guided to the second roller 40.

In this embodiment, the vibrating screen 11 is adopted to realize the granulation of the fibrotic powders. At the same time, powders with different particle sizes can be obtained through screens with different pore sizes, so as to control different film-forming efficiencies. Meanwhile, agglomeration of the fibrotic powders can be prevented, thereby ensuring the uniformity and continuity of feeding.

Further, in order to ensure the flatness of the edge of the produced final film, the apparatus for preparing the dry electrode film further includes a cutting structure 30 for cutting edges of the primary film 300. The cutting structure 30 includes a support roller 31, an edge cutting knife 32, a powder sucking nozzle 33 and a dust collecting box 34. The support roller 31 is used for supporting the primary film 300. The edge cutting knife 32 is used for cutting the edges of the primary film 300. The powder sucking nozzle 33 is used for sucking away the debris and dust generated during the cutting process of the edge cutting knife 32. By providing the edge cutting knife 32, the flatness of the primary film 300 can be adjusted in the this step. At the same time, the powders and debris are prevented from flying into the environment through adsorption of the powder sucking nozzle 33 and collection of the dust collecting box 34.

## Claims

1. A method for preparing a dry electrode sheet film, **characterized in that** the method comprises:

   providing a pair of first rollers (20) with a roll diameter of d1, setting a pressure of each of the pair of first rollers (20) as t1, and rolling and pressing fibrotic powders through the pair of first rollers (20) to obtain a primary film (300) with a first thickness;
   providing a pair of second rollers (40) with a roll diameter of d2, and d2 being less than d1, setting a pressure of each of the second rollers (40) as t2, and t2 being less than t1, and subjecting the primary film (300) to first thinning through the pair of second rollers (40) to obtain a secondary film (400) with a second thickness; and
   providing at least one pair of third rollers (50) with a roll diameter of d3, and d3 being greater than d1, setting a pressure of each of the third rollers (50) as t3, and t3 being greater than t1, and subjecting the secondary film (400) to second thinning through the pair of third rollers (50) to obtain a target film (500) with a target thickness.

2. The method according to claim 1, **characterized in that** 10 cm≤d1≤30 cm; 5 cm≤d2≤20 cm; 15 cm≤d3≤60 cm.

3. The method according to claim 1 or 2, **characterized in that** a rotational speed of each of the pair of first rollers (20) is V1, a rotational speed of each of the pair of the second rollers (40) is V2, a rotational speed of each of the pair of the third rollers (50) is V3, and V2≥V3>V1.

4. The method according to claim 3, **characterized in that**

$$0 \text{ rpm}<V1\leq1800 \text{ rpm};$$

$$500 \text{ rpm}\leq V2\leq2000 \text{ rpm};$$

and

$$500 \text{ rpm}\leq V3\leq2000 \text{ rpm}$$

5. The method according to claim 1 or 2, **characterized in that** 0.8 tons≤t1≤8 tons, 0.5 tons≤t2≤7 tons, and 1 ton≤t3≤10 tons.

6. The method according to claim 1 or 2, **characterized in that** a temperature of each of the pair of first rollers (20) is T1, a temperature of each of the pair of second rollers (40) is T2, and a temperature of each of the pair of third rollers (50) is T3; and wherein T1≥T2>T3.

7. The method according to claim 6, **characterized in that** 50°C≤T1≤200°C, 50°C≤T2≤200°C, 0°C≤T3≤150°C.

8. The method according to claim 1 or 2, **characterized in that**

   the first thickness of the primary film (300) ranges from 0.2 mm to 1.0 mm;
   the second thickness of the secondary film (400) ranges from 0.1 mm to 0.3 mm; and
   the target thickness of the target film (500) ranges from 0.06 mm to 0.2 mm.

9. An apparatus for preparing a dry electrode sheet film (200), **characterized in that** the apparatus (200) comprises:

   a pair of first rollers (20) disposed downstream of a feeding structure (10) for rolling and pressing fibrotic powders to obtain a primary film (300) with a first thickness, a roll diameter of each of the pair of first rollers (20) is d1, and a pressure of each of the pair of first rollers (20) is t1;

a pair of second rollers (40) disposed downstream of the pair of first rollers (20) for subjecting the primary film (300) to first thinning to obtain a secondary film (400) with a second thickness, a roll diameter of each of the pair of second rollers (40) is d2, and a pressure of each of the pair of second rollers (40) is t2; and

at least one pair of third rollers (50) disposed downstream of the pair of second rollers (40) for subjecting the secondary film (400) to second thinning to obtain a target film (500) with a target thickness, a roll diameter of each of the at least one pair of third rollers (50) is d3, and a pressure of each of the pair of at least one pair of third rollers (50) is t3;

wherein d3>d1>d2, and t3>t1>t2.

10. The apparatus (200) according to claim 9, **characterized in that** the apparatus (200) further comprises a cutting structure (30) for cutting edges of the primary film (300), wherein the cutting structure (30) comprises a support roller (31) for supporting the primary film (300), an edge cutting knife (32) for cutting the edges of the primary film (300), a powder sucking nozzle (33) for sucking away debris and dust generated during a cutting process of the edge cutting knife (32), and a dust collecting box (34) for collecting debris and dust absorbed by the powder sucking nozzle (33).

11. The apparatus (200) according to claim 9, **characterized in that** the apparatus (200) further comprises a feeding structure (10) for feeding fibrotic powders to the pair of the first rollers (20), wherein the feeding structure (10) comprises a vibrating screen (11) and a movable tank (12) disposed below the vibrating screen (11), and the movable tank (12) is used for receiving the fibrotic powders dropped from the vibrating screen (11) and sending them out.

12. A target film (500), **characterized in that** the target film (500) is obtained by a first rolling and pressing process, a second rolling and pressing process and a third rolling and pressing process, and a thickness of the target film (500) ranges from 0.06 mm to 0.2 mm.

13. The target film (500) according to claim 12, **characterized in that** a primary film (300) obtained by the first rolling and pressing process has a tensile strength of 1.15 MPa and an elongation at break of 9.86%.

14. The target film (500) according to claim 12, **characterized in that** a secondary film (400) obtained by the second rolling and pressing process has a tensile strength of 1.39 MPa and an elongation at break of 8.59%.

15. The target film (500) according to claim 12, **characterized in that** the target film (500) obtained by the third rolling and pressing process has a tensile strength of 1.53 MPa and an elongation at break of 8.24%.

<u>100</u>

Providing a pair of first rollers with a roll diameter of d1, setting a pressure of each of the pair of first rollers as t1, and rolling and pressing fibrotic powders through the pair of first rollers to obtain a primary film with a first thickness ⌐S2

Providing a pair of second rollers with a roll diameter of d2, wherein d2 is less than d1, setting a pressure of each of the second rollers as t2, wherein t2 is less than t1, and carrying out first thinning on the primary film through the pair of second rollers to obtain a secondary film with a second thickness ⌐S4

Providing at least a pair of third rolls with a roll diameter of d3, wherein d3 is greater than d1, setting a pressure of each of the third rolls as t3, wherein t3 is greater than t1, and carrying out second thinning on the secondary film through the pair of third rollers to obtain a target film with a target thickness ⌐S6

FIG. 1

FIG. 2

FIG. 3

Europäisches
Patentamt

European
Patent Office

Office européen
des brevets

# EUROPEAN SEARCH REPORT

**Application Number**

EP 24 20 5891

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 115 621 408 A (SHANGHAI XIANDAO HUINENG TECH CO LTD) 17 January 2023 (2023-01-17)<br>* figure 1 *<br>* claims 1-10 *<br>* tables 1, 2 *<br>* paragraphs [0023], [0024] *<br>- - - - - | 1-15 | INV.<br>H01M4/04<br>H01M4/139<br>B29C43/24 |
| X | CN 112 542 563 B (EVE ENERGY CO LTD; EVE INNOVATION ENERGY CO LTD)<br>13 May 2022 (2022-05-13)<br>* figure 1 *<br>* paragraphs [0009] - [0013], [0054] - [0065] *<br>- - - - - | 1-11 | |

**TECHNICAL FIELDS SEARCHED (IPC)**

H01M
B29C

The present search report has been drawn up for all claims

| Place of search | Date of completion of the search | Examiner |
|---|---|---|
| The Hague | 21 March 2025 | Gomes Pinto F., R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5891

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | | Publication date | Patent family member(s) | | Publication date |
|---|---|---|---|---|---|
| CN 115621408 | A | 17-01-2023 | CN | 115621408 A | 17-01-2023 |
| | | | WO | 2024082889 A1 | 25-04-2024 |
| CN 112542563 | B | 13-05-2022 | NONE | | |

EPO FORM P0459

For more details about this annex : see Official Journal of the European Patent Office, No. 12/82